Europäisches Patentamt

European Patent Office

Office européen des brevets

(19)

(11) Publication number: **0 322 148**
**A1**

## EUROPEAN PATENT APPLICATION

(21) Application number: 88311799.6

(51) Int. Cl.4: **A01J 25/13**

(22) Date of filing: **14.12.88**

(30) Priority: **22.12.87 DK 6768/87**

(43) Date of publication of application:
**28.06.89 Bulletin 89/26**

(84) Designated Contracting States:
**AT BE CH DE ES FR GB GR IT LI LU NL SE**

(71) Applicant: **Kaiser, Niels**
**Bilstrupvej 32**
**DK-7800 Skive(DK)**

(72) Inventor: **Toft, Poul c/o Vikan Borste**
**Produktion A/S**
**Frisenborgvej**
**DK-7800 Skive(DK)**

(74) Representative: **Arthur, John William et al**
**FITZPATRICKS 4 West Regent Street**
**Glasgow G2 1RS Scotland(GB)**

(54) Plate unit for a cheese mould, cheese mould and method for producing the plate unit.

(57) A plate unit for a cheese mould is provided with
through-going drain holes (14) close to the side
which is to bear against the curd and is designed on
the opposite side with a network-like lattice-shaped
structure (20) into the bottom (12) of which the drain
holes (14) open. The plate unit according to the
invention lays open more space for drain holes (14)
at the same time while the unit has sufficient rigidity.
Instead of milling the recesses into the structure (20)
production of the plate unit is made cheaper by
producing same of a plate section (10) and a web
element (20) which are joined by welding. Moreover,
the web element (20) may be provided with projec-
tions (21) thereby forming openings (25) between
the plate section (10) and the lattice walls (22).

Fig. 4

# PLATE UNIT FOR A CHEESE MOULD, CHEESE MOULD AND METHOD FOR PRODUCING THE PLATE UNIT

The invention relates to a plate unit for a cheese mould of the kind where on the side opposite the cheese side the unit has recesses the depth of which constitute the greater part of the thickness of the unit and the bottom of which are provided with comparatively small through holes, a cheese mould built up by plate units and a method for producing the plate unit.

Plate units of this kind are used for the sides and the bottom of the cheese moulds so that the whey may be pressed out of the curd. During the pressing where a piston presses against the upper side of the cheese, it is essential that the plate units have sufficient thickness and thus rigidity to withstand the pressure without substantial deformation and that they are at the same time capable of draining off the whey released. To avoid deformation of the surface of the cheese during the pressing, the drain holes have been designed very small with a diametre in the order of 0.6 mm. This size of hole means that the length of the holes cannot be very large without creating problems in the manufacture thereof.

In the production of the known plate unit the recesses are produced by milling of a solid plate having a thickness corresponding to the overall thickness of the plate unit. Due to the process of manufacture it is only possible in this known structure to make the recesses in the shape of cylindrical holes. A comparatively large area between the holes is thus rendered impermeable to the whey.

It is an object of the plate unit according to the invention to provide a structure which is just as rigid as the abovementioned known plate unit, but where a greater part of the plate unit is laid open for perforations for draining off whey.

This is achieved according to the invention by a plate unit of the above kind which is characterized in that the plate unit is is an assembly of a plate section having a relatively small thickness and wherein the through holes are provided, and a relatively thick web element substantially co-extending with the plate section, said web element having a network-like lattice structure, the plate section and the web element being joined together in spots or delimited areas distributed across the plate section.

The plate unit according to the invention is advantageous in that the walls between the recesses form a net-like structure, which seen at right angles thereto may for example be rectangular, parallelogram-shaped or honeycomb-shaped, i.e. hexagonal, whereby a greater area of the bottom of the recesses are laid open to the drain holes. This will therefore ensure better draining during the pressing due to the increased number of holes in the plate unit.

A cheese mould with a structure superficially comparable with the characteristics of the invention is known from DK B 151,163. This previously known mould consists of an inner box with comparatively thin walls and an outer structure of strengthening ribs mounted by assembling and tightening them around the box is described. The cheese mould thus produced may attain the same performance in draining away the whey as a cheese mould made from a plate unit according to the invention. The main disadvantage of the cheese mould according to the Danish publication is that there is no fixed connection between the outer structure and the inner box which may therefore be mutually displaced so that the plate units in the box will only offer slight resistance by deformation due to the working pressure. Said described cheese mould has not adequate rigidity. Moreover, the mould is complicated to work with by automatic handling when the loose inner mould is to be assembled with the strengthening ribs.

Finally, the cheese mould according to the DK B 151,163 cannot be disassembled into individual wall elements without its constituents losing their function. The supporting structure is not designed to support the walls individually but only to support the inner mould as a whole. It is therefore not possible to use separate plate units for building up a cheese mould according to this technique.

A design of the plate unit as disclosed in claim 2, where in the web element there are recesses facing the plate section and thus forming openings between the plate section and the web element, will ensure partly that a greater area of the plate section is laid open for providing the drain holes, and partly that the openings between the lattice walls and the plate section allow passage for cleaning liquid which affords easier and more effective cleaning of the plate unit.

A cheese mould according to the invention built up by plate units according to the invention of course has the same apparent advantages following from the particular structure of the plate unit.

The invention also relates to a method for producing a plate unit for use as side and/or bottom in a cheese mould and of the kind where on the side opposite the cheese side the unit has recesses the depth of which constitute the greater part of the thickness of the unit and the bottom of which are provided with comparatively small through holes.

In the hitherto known process of manufacture of such plate units the starting material is a comparatively thick plate unit wherein from one side thereof recesses are milled to a depth of approx. 80% of the plate thickness. On the opposite side of the plate, which in use bears against the cheese, the surface is cross-grooved and by way of hot pins there are produced through holes opening into the bottom of the recesses on the opposite side. The length of the holes is approx. 5 times the diametre thereof.

The known method is encumbered with two disadvantages. Firstly, it is costly relative to materials and requires substantial processing time due to the milling operation. Secondly, the relatively small holes in the bottom of the recesses are difficult to produce securely. Due to the process of manufacture the material is displaced rather than removed which means that when the unit is cleaned in the usual manner in 70° C hot water, the fine holes will tend to close when the stresses in the material are released due to the action of heat.

It is also an object of the invention to provide a simpler and thus cheaper and less time-consuming method for producing a plate unit of the known kind.

The characteristic feature in the method according to the invention is the steps that there is produced separately a relatively thin plate section with the through holes and a web element with net-like lattice structure of relatively great thickness, and then the web element is joined with the plate section in spots or limited surfaces distributed across the plate section.

There is thus obtained a plate unit with great overall thickness and thus large rigidity without it being necessary to mill off large quantities of material from the recesses. The web element with network-like lattice structure is relatively cheap and quickly produced by known methods, for example by interlacing straight strips or by injection moulding. The joining of the plate section and the web element may also take place by known rational methods such as vibration or heating element welding.

In the method according to the invention there is also provided the possibility of producing the fine drain holes in a more secure way as disclosed in claim 5 where said through holes are formed in the plate section by injection moulding. By said method the holes in the plate section are produced without deformation stresses as by the conventional technique, and the risk that the holes are closed during heating is reduced or completely eliminated. At the same time it is made possible to produce conical holes with the smallest dimension at the cheese side. Also, burrs by the edges of the holes as when punching the holes are avoided.

Two embodiments of the invention will be further described in the following with reference to the drawing wherein

Fig. 1 is a perspective view of a plate section for use in a plate unit according to the invention,

Fig. 2 is also a perspective view of a web element for use in a plate unit according to the invention,

Fig. 3 is a section of the plate unit according to the invention seen in a direction perpendicularly to the surface of the unit,

Fig. 4 is a section on the line IV-IV in Fig. 3,

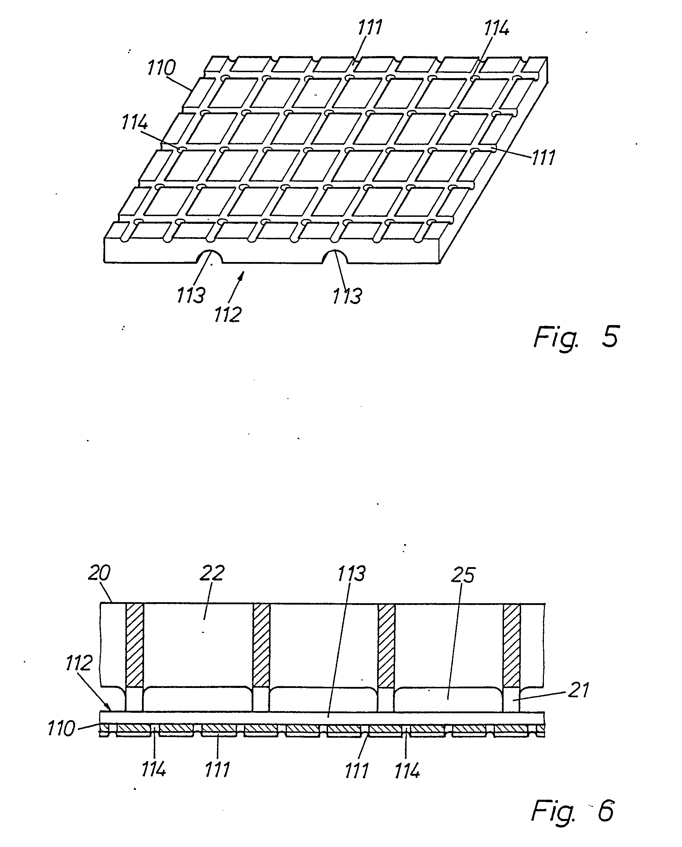

Fig. 5 is another embodiment of the plate section, and

Fig. 6 is a sectional view of another embodiment of the plate unit according to the invention.

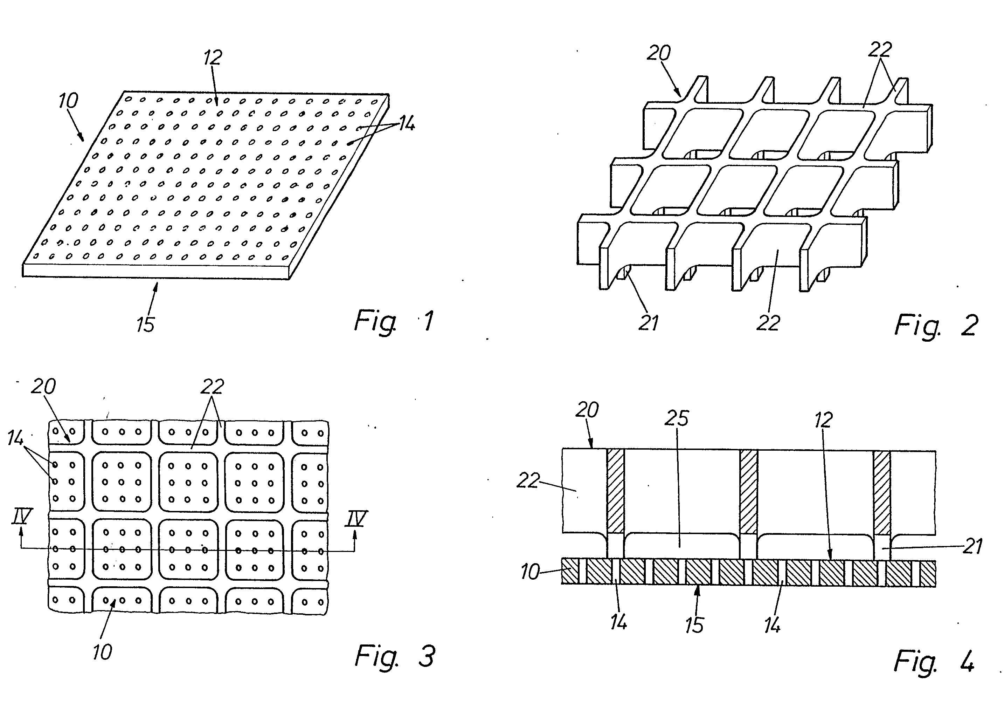

A preferred embodiment of the plate unit according to the invention is seen in Figs. 3 and 4. A plate section 10 with a comparatively large number of holes 4 is produced by injection moulding, for example in the material polypropylene. If desired, one side 15 is cross-grooved in such a manner that fine drain channels are produced in connection with the holes 14, said channels having a depth of 0.5 - 1 mm.

A web element 20 with network-like lattice structure is also injection moulded, said unit being comparatively high relatively to the thickness of the plate section 10 and which is provided with short feet 21 in the points of intersection of the lattice. The web element 20 has fairly the same areal extension as the plate section 10.

The two parts 10 and 20 are then joined by heating element or vibration welding in such a manner that the feet 21 melt onto the side 12 of the plate section 10 opposite the cross-grooving.

In another embodiment of the method according to the invention an extruded plate section 110, such as a semi-manufactured plate of polypropylene, is provided with a cross-grooving 111. The opposite side 112 of the plate section 110 is designed with a number of deep grooves 113 which may be placed at intervals corresponding to the distance between every third groove of the grooving 111. Then the drain holes 114 are punched in the bottom of the grooves 113 and in places where at the same place on the opposite side of the plate 110 there are intersecting grooves 111.

Then the web element 20 and the plate section 110 are joined by heating element welding or vibration welding as stated above.

In both embodiments openings 25 are formed between the lattice walls 22 and the side 12 and 112, respectively, of the plate section thereby laying open the largest possible area for producing the drain holes 14 and 114, respectively, and thereby providing particularly favourable conditions by the cleaning of a cheese mould produced of plate units according to the invention.

In other embodiments of the invention the lattice structure of the web element 20 may differ by having the shape of intersecting circles or with hexagonal or round shapes. Furthermore, other materials approved for foodstuffs may be used within the scope of the invention.

The plate unit according to the invention might moreover be produced in a single or double curvature embodiment in that the web element 20, perhaps also the plate section 10, is moulded in this shape. It is thereby possible to design two or more plate units according to the invention so as to form the curved side of for example a cylindrical mould. The plate unit according to the invention may moreover be used as a filter unit by the pressing of cheese material.

## Claims

1. Plate unit for use as side and/or bottom in a cheese mould, the plate unit being of the kind having recesses on the side opposite the cheese side, the depth of the recesses constituting the greater part of the thickness of the plate unit and the bottom (12) of the recesses having comparatively small through holes (14), **characterized** in that the plate unit is an assembly of a plate section (10) having a relatively small thickness and wherein the through holes (14) are provided, and a relatively thick web element (20) substantially co-extending with the plate section (10), said web element (20) having a network-like lattice structure, the plate section (10) and the web element (20) being joined together in spots or delimited areas distributed across the plate section (10).

2. Plate unit according to claim 1, **characterized** in that in the web element (20) there are recesses facing the plate section (10) and thus forming openings (25) between the plate section (10) and the web element (20).

3. Cheese mould comprising one or more plate units according to claim 1 or 2.

4. Method for producing a plate unit according to claim 1 or 2 for use as side and/or bottom of a cheese mould and of the kind where on the side opposite the cheese side the unit has recesses the depth of which constitute the greater part of the thickness of the unit and the bottom (12) of which are provided with comparatively small through holes (14), **characterized** by the step of separately producing a relatively thin plate section (10) with the through holes (14) and a web element (20) with net-like lattice structure of relatively great thickness and the step of then joining the web element (20) with the plate section (10) in spots or limited surfaces distributed across the plate section (10).

5. Method according to claim 4, **characterized** in that the plate section (10) with the through holes is made by injection moulding.

*12*

*10*

*14*

*15*

**Fig. 1**

*20*

*22*

*21*

*22*

**Fig. 2**

*20*

*22*

*14*

IV

IV

*10*

**Fig. 3**

*20*

*25*

*12*

*22*

*21*

*10*

*14*

*15*

*14*

**Fig. 4**

EP 0 322 148 A1

Fig. 5

Fig. 6

## EUROPEAN SEARCH REPORT

Application Number

EP   88 31 1799

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1460509 (ALFA-LAVAL)<br>* page 1, line 39 - page 2, line 3 *<br>* page 2, line 29 - line 35 *<br>* figure 2 * | 1, 3, 4 | A01J25/13 |
| Y | US-A-3797980 (BUDAHN)<br>* column 2, line 59 - column 3, line 49 * | 1, 3, 4 | |
| D,A | DK-B-151163 (VIKAN BORSTE PRODUKTION A/S)<br>* page 4 - 5; figures 1-3 * | 1 | |
| A | DE-A-2407583 (GEESSINK)<br>* the whole document * | 1 | |
| A | CH-A-462527 (MKT-TEHTAAT OY)<br>* column 3, line 39 - line 51 * | 1 | |

| | |
|---|---|
| | TECHNICAL FIELDS SEARCHED (Int. Cl.4) |
| | A01J |

The present search report has been drawn up for all claims

| Place of search | Date of completion of the search | Examiner |
|---|---|---|
| THE HAGUE | 04 APRIL 1989 | VAN OORSCHOT J.W.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)